# EUROPÄISCHE PATENTSCHRIFT

(11) **EP 3 430 887 B1**
(45) Veröffentlichungstag und Bekanntmachung des Hinweises auf die Patenterteilung: **18.12.2019**
(21) Anmeldenummer: 18176531.4
(22) Anmeldetag: 07.06.2018
(51) Int. Cl.: E02D 3/115

(54) **VERFAHREN UND VORRICHTUNG ZUM VERRINGERN DES ABSCHMELZENS VON GLETSCHERN**
METHOD AND DEVICE FOR REDUCING THE MELTING OF GLACIERS
PROCÉDÉ ET DISPOSITIF DE DIMINUTION DE LA FONTE DES GLACIERS

(30) Priorität: 19.07.2017 DE 202017104286 U
(43) Veröffentlichungstag der Anmeldung: 23.01.2019
(73) Patentinhaber: Huber, Franz, 83703 Gmund (DE)
(72) Erfinder: Huber, Franz, 83703 Gmund (DE)
(74) Vertreter: Grünecker Patent- und Rechtsanwälte PartG mbB

(56) Entgegenhaltungen:
- EP-A1- 0 104 034
- EP-A1- 0 240 713
- WO-A1-2011/030997
- DE-B- 1 058 301
- DE-U1-202004 016 620
- GB-A- 2 285 953
- JP-A- 2010 249 384
- US-A- 3 452 813
- US-A- 4 111 258
- US-A1- 2013 277 017
- Johannes Gutenberg-Universität Mainz: "Windfang am Schweizer Rhône-Gletscher aufgebaut - Abschmelzung soll verringert werden", uni-mainz.de, 15. August 2008 (2008-08-15), Seiten 1-2, XP055502743, Gefunden im Internet: URL:http://www.uni-mainz.de/presse/24224.p hp [gefunden am 2018-08-28]

## Beschreibung

Die Erfindung bezieht sich auf ein Verfahren und eine Vorrichtung zum Verringern des Abschmelzens von Gletschern mit Gletscherspalten durch Wärmeentzug.

Der Klimawandel lässt global die Durchschnittstemperaturen steigen, was zu einem immer schnelleren Abschmelzen von Gletschern führt. Dies bringt gravierende Nachteile mit sich, insbesondere für die Wasserversorgung und den Tourismus.

Es wird vielfach, insbesondere in Gletscherskigebieten, versucht, dem Abschmelzen der Gletscher entgegenzuwirken, beispielsweise durch Abdecken mit lichtreflektierenden Planen, was aber aufwändig und wenig wirksam ist. Bei einem aus der JP 2010-249384 A bekannten, gattungsgemäßen Verfahren wird unterhalb der Gletscherzunge in den Felsboden ein Rohr eingerammt, das an seinem oberen, freien Ende Wärmeabstrahlelemente trägt. Dadurch soll der Boden im Gletscherbereich gekühlt werden. Durch Strahlung lassen sich bei den real auftretenden Temperaturdifferenzen jedoch nur geringe Wärmemengen abführen, so dass die bekannte Methode wenig Erfolg verspricht. Sie hat außerdem den Nachteil, dass das Wärmeabstrahlrohr gegen Abscheren durch den sich bewegenden Gletscher gesichert werden muss, was baulich sehr aufwändig ist.

Der Erfindung liegt die Aufgabe zugrunde, ein Verfahren und eine zum Durchführen des Verfahrens geeignete Vorrichtung zu schaffen, mit dem dem Abschmelzen von Gletschern wirksam und auf einfache Weise entgegengewirkt werden kann.

Diese Aufgabe wird erfindungsgemäß durch die Merkmale des Anspruchs 1 gelöst. Die Erfindung beruht auf dem Gedanken, dass die Luft in den Gletscherspalten, namentlich wenn diese durch Schneebrücken nach außen abgedeckt sind, während eines großen Teils des Jahres wärmer ist als die über dem Gletscher ruhende Umgebungsluft. Wenn man daher die wärmere Luft aus den Gletscherspalten durch kältere Umgebungsluft ersetzt, werden der Gletscher und das ihn tragende Gestein abgekühlt und dadurch ein Abschmelzen verhindert oder zumindest deutlich verringert.

Zweckmäßigerweise wird nach Anspruch 2 die Luft aus der Gletscherspalte abgesaugt. Durch den entstehenden Unterdruck wird Umgebungsluft durch die die Gletscherspalten abdeckende Schneedecke oder durch Öffnungen in der Schneedecke beziehungsweise zwischen der Schneedecke und dem Gestein nachgesaugt, wodurch der Gletscher von innen her großflächig gekühlt wird.

Zweckmäßigerweise wird das Verfahren gemäß Anspruch 3 dann durchgeführt wenn die Gletscherspalten, insbesondere die Randspalten, durch Schneebrücken abgedeckt sind. In diesem Zustand ist in der Regel die Luft in den Gletscherspalten deutlich wärmer als die Umgebungsluft, so dass der Luftaustausch zu einer intensiven Abkühlung führt. Außerdem entsteht durch Absaugen der Luft unter den Schneebrücken ein besonders starker Unterdruck, der zu einem starken Nachfließen von Umgebungsluft führt. Dabei kann dieses Nachfließen durch Zuströmkanäle, beispielsweise durch die Schneebrücken gesteckte beidseits offene Rohre, verbessert werden, soweit die natürlichen Durchlässe in den Schneebrücken und zwischen dem Schnee beziehungsweise Eis und dem Umgebungsgestein nicht ausreichen sollte. Die Nachströmkanäle sind dabei in größerer Entfernung von der Absaugstelle anzubringen, damit kein Kurzschluss im Luftstrom entsteht.

Eine zweckmäßige Vorrichtung zum Durchführen des erfindungsgemäßen Verfahrens weist die Merkmale nach Anspruch 4 auf. Mit den Elementen dieser Vorrichtung lässt sich die Temperaturdifferenz zwischen der Luft in der Gletscherspalte und der Umgebungsluft ermitteln und damit eine Absaugeinheit sowie eine Verschlusseinrichtung steuern, mit deren Hilfe wärmere Luft aus der Gletscherspalte abgesaugt und durch kältere Luft aus der Umgebung ersetzt werden kann.

Ökologisch günstig ist es, wenn die Pumpe der Absaugeinheit gemäß Anspruch 5 durch Windenergie antreibbar ist.

Vorzugsweise wird dann der Antrieb baulich gemäß Anspruch 6 gestaltet, wobei ein Flügelrad der Pumpe und ein Windrad auf einer gemeinsamen Welle sitzen, was zur baulichen Einfachheit, insbesondere dem Vermeiden eines Getriebes, beiträgt.

Gemäß Anspruch 7 ist die Verschlusseinrichtung zweckmäßigerweise als schwenkbare Verschlussklappe ausgebildet, die im Saugrohr den Luftstrom absperrt beziehungsweise freigibt.

Bei der bevorzugten Ausführung der erfindungsgemäßen Vorrichtung nach Anspruch 8 ist das Saugrohr L-förmig und kann dadurch mit einem L-Schenkel in die Gletscherspalte eingeführt werden, während der zweite L-Schenkel oberhalb der Gletscheroberfläche liegt und aufgrund seiner horizontalen Ausrichtung nicht von oben her zugeschneit oder verschmutzt werden kann.

Zweckmäßigerweise enthält nach Anspruch 9 der erste L-Schenkel die Verschlusseinrichtung und der zweite L-Schenkel die Pumpe. Letztere ist dadurch in dem horizontalen Saugrohrabschnitt gut geschützt und trotzdem zu Wartungs- und Reparaturzwecken zugänglich.

Gemäß Anspruch 10 ist die Absaugeinheit nach Art einer Windfahne so aufgebaut, dass sich der das Windrad tragende Teil gegenüber dem in der Gletscherspalte fest verankerten Teil selbsttätig so dreht, dass das Windrad in Richtung seiner Drehachse vom Wind angeströmt wird und dadurch eine optimale Leistung erbringt.

Die Stromversorgung für die Mess- und Steuereinheit beziehungsweise den Stellantrieb für die Verschlusseinrichtung kann mittels Batterie oder Solarenergie erfolgen, wird aber zweckmäßigerweise nach Anspruch 11 dadurch gewährleistet, dass dem Pumpenantrieb ein Stromerzeuger zugeordnet ist, so dass dieser nicht nur das arbeitende Pumpenelement antreibt, sondern zugleich Strom generiert.

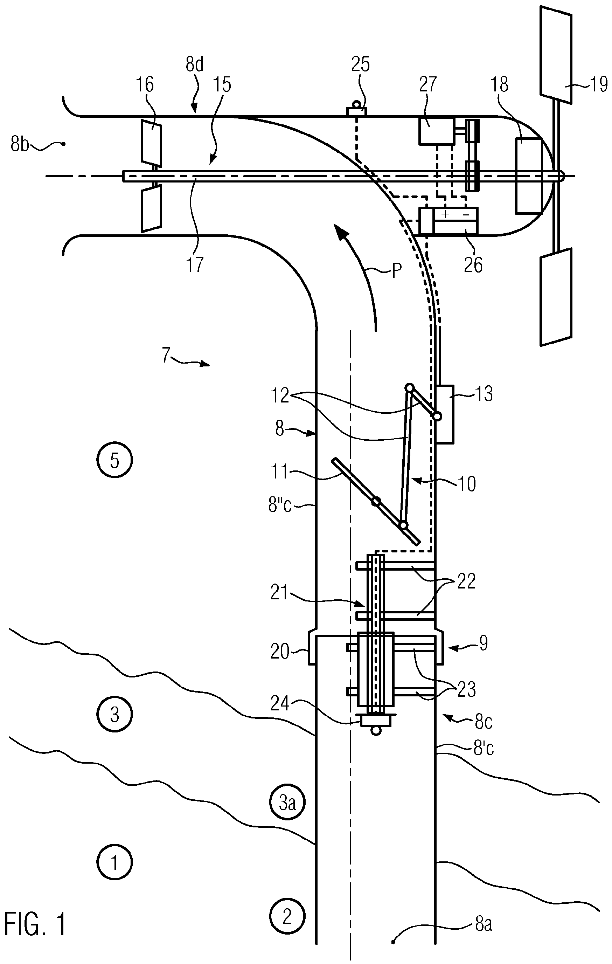

Ein Ausführungsbeispiel der erfindungsgemäßen Vorrichtung ist in der Zeichnung dargestellt, deren einzige Figur einen schematischen Vertikalschnitt durch das Gerät zeigt.

In der Zeichnung weist ein Gletscher 1 eine Gletscherspalte 2 auf. Eine auf dem Gletscher 1 liegende Schneeschicht 3 bildet oberhalb der Gletscherspalte 2 eine Schneebrücke 3a, die die Gletscherspalte 2 gegenüber der oberhalb des Gletschers befindlichen Umgebungsluft 5 weitgehend abschließt. Die Schneebrücke 3a ist allerdings nicht vollkommen dicht; vielmehr ist die Schneeschicht porös und weist stellenweise Lücken und Löcher auf, was in der Zeichnung nicht näher dargestellt ist. Die gezeigte Gletscherspalte 2 liegt innerhalb des Gletschers 3, könnte aber auch eine sogenannte Randspalte zwischen dem Gletscher und dem umgebenden Gestein sein.

Die erfindungsgemäße Vorrichtung, mit der wärmere Luft aus der Gletscherspalte 2 durch kältere Umgebungsluft 5 ersetzt werden soll, weist eine allgemein mit 7 bezeichnete Absaugeinheit auf. Deren Kernstück ist ein L-förmiges Saugrohr 8 das ein in die Gletscherspalte 2 ragendes Ansaugende 8a und ein mit der Umgebungsluft 5 in Verbindung stehendes Auslassende 8b besitzt. Das Saugrohr 8 weist einen mit seinem freien unteren Ende an-nähernd vertikal in die Gletscherspalte 2 eintauchenden Schenkel 8c und einen kürzeren, oberhalb des Gletschers 1 befindlichen, in der Regel horizontal ausgerichteten Schenkel 8d auf. Der erste L-Schenkel 8c ist zweiteilig und besteht aus einem unteren Lagerabschnitt 8'c und einem oberen Drehabschnitt 8"c. Der Lagerabschnitt 8'c ist mit nicht gezeichneten Mitteln, beispielsweise mit Eisschrauben oder Felsankern in der Gletscherspalte 2 fest montiert, während der obere Drehabschnitt 8"c sich über ein Drehlager 9 auf dem Lagerabschnitt 8'c drehbar abstützt. Der Drehabschnitt 8"c ist fest mit dem zweiten L-Abschnitt 8d verbunden beziehungsweise mit diesem einteilig, wie aus der Zeichnung ersichtlich.

Der erste L-Abschnitt 8c des Saugrohrs 8 enthält eine allgemein mit 10 bezeichnete Verschlusseinrichtung, deren Hauptbestandteil eine schwenkbar im Saugrohr gelagerte Verschlussklappe 11 ist. Diese ist mittels eines Lenkergetriebes 12 mit einem Schwenkantrieb 13 verbunden, mittels dessen die Verschlussklappe 11 aus einer den Luftstrom durch das Saugrohr 8 abriegelnden Sperrstellung in eine diesen Luftstrom durchlassende Freigabestellung und umgekehrt verstellbar ist. Der Stellantrieb 13 kann beispielsweise ein Stellmagnet oder ein Stellzylinder sein und ist in der Zeichnung nur schematisch dargestellt.

Der zweite L-Schenkel 8d des Saugrohrs 8 enthält eine allgemein mit 15 bezeichnete Pumpe, deren Kernstück ein Flügelrad 16 ist, das auf einer Welle 17 fest montiert ist. Die Welle 17 wird in einem fest mit dem L-Schenkel 8d verbundenen Lager 18 gehalten und ragt durch dieses Lager hindurch nach außen. Der dort freiliegende Wellenabschnitt trägt ein Windrad 19, mit dem die Welle 17 und damit das Flügelrad 16 antreibbar sind.

Wie bereits oben erwähnt, ist der das Windrad 19 tragende Abschnitt 8d, 8"c des Saugrohrs 8 gegenüber dem feststehenden Lagerabschnitt 8'c mittels eines Drehlagers 9 drehbar. Dieses Drehlager wird durch eine Muffe 20 gebildet, mit der der Drehabschnitt 8"c auf dem Lagerabschnitt 8'c sitzt. Ergänzt wird das Drehlager 9 durch eine teleskopartige Drehachse 21, deren oberer Teil durch Streben 22 mit dem Drehabschnitt 8"c und deren unterer Teil durch Streben 23 mit dem Lagerabschnitt 8'c verbunden ist.

Zum Steuern der Verschlusseinrichtung 10 dient eine Mess- und Steuereinrichtung, deren Hauptbestandteile ein erster, der Luft in der Gletscherspalte 2 ausgesetzter Temperaturfühler 24 und ein zweiter, der Umgebungsluft 5 ausgesetzter Temperaturfühler 25 sind, deren Ausgangswerte in einer Vergleichs- und Steuerschaltung 26 ausgewertet werden. Die Schaltung 26 ist mit dem Stellantrieb 13 verbunden. Die verschiedenen Verbindungsleitungen sind in der Zeichnung gestrichelt angedeutet.

Die Stromversorgung für die Mess- und Steuereinrichtung 24 - 26 erfolgt mittels eines Generators 27, der von der Welle 17 aus mittels des Windrads 19 angetrieben wird.

Die beschriebene Vorrichtung arbeitet wie folgt:
Stellt die Vergleichsschaltung 26 zwischen den Messwerten der Sensoren 24 und 25 eine positive Temperaturdifferenz fest, so gibt sie an den Stellantrieb 13 ein Signal ab, das eine Öffnung der Verschlussklappe 11 bewirkt. Dadurch wird der Strömungsweg zwischen dem Ansaugende 8a und dem Auslassende 8b des Saugrohrs 8 freigegeben. Der über den Gletscher streichende Wind treibt das Windrad 19 und dieses über die Welle 17 das Flügelrad 16 an. Dieses saugt im Sinne des Pfeiles P Luft aus der Gletscherspalte 2 ab und entlädt sie durch das Auslassende 8b in die Umgebungsluft 5. Durch die poröse Schneebrücke 3a sowie gegebenenfalls durch in größerem Abstand von der Vorrichtung 7 angeordnete Nachströmkanäle fließt die kalte Umgebungsluft 5 in die Gletscherspalte und kühlt den Gletscher dadurch von innen her.

Solange die Luft in der Gletscherspalte dieselbe Temperatur hat wie die Umgebungsluft oder gar kälter ist, bleibt die Verschlussklappe 11 geschlossen, so dass kein Luftaustausch erfolgt.

Aufgrund der Drehverbindung zwischen dem oberen Teil 8d, 8"c des Saugrohrs 8 und dessen unterem Teil 8'c kann sich das Windrad 19 wie eine Windfahne so in den Wind drehen, dass es eine optimale Antriebsenergie aufnimmt.

Zum wirksamen Kühlen eines Gletschers ist es natürlich notwendig, eine Vielzahl von Vorrichtungen 7 entlang der Gletscherspalten und der Randspalten anzuordnen, um ein zur Kühlung ausreichendes Luftvolumen aus der Umgebung in das Gletscherinnere zu fördern. Beispielsweise können entlang der Randspalte eines Gletschers alle 20-30 m Vorrichtungen 7 platziert werden. Eine ähnliche Anordnung kann entlang der im Innenbereich des Gletschers befindlichen Gletscherspalten getroffen werden.

Die Erfindung ist nicht auf das gezeichnete Ausführungsbeispiel beschränkt. So könnte die Pumpe statt mit Windenergie auch mit Solarenergie angetrieben werden, was aber wegen der erforderlichen Solarpaneele und eventuell Batterien zum Stromspeichern für den Nachtbetrieb technisch aufwändiger wäre. Statt einer verschwenkbaren Verschlussklappe könnte auch ein Schieberverschluss eingesetzt werden. Die Pumpe muss nicht unbedingt eine Flügelradpumpe sein; denkbar ist auch eine auf Injektorwirkung beruhende Pumpe, bei der der an der Auslauföffnung des Saugrohres entlang streichende Wind den Absaugeffekt bewirkt.

## Patentansprüche

1. Verfahren zum Verringern des Abschmelzens von Gletschern mit Gletscherspalten durch Wärmeentzug, **dadurch gekennzeichnet, dass** bei einer positiven Temperaturdifferenz zwischen der Lufttemperatur in einer Gletscherspalte (2) in insbesondere einer Randspalte, und der Temperatur der Umgebungsluft (5) wärmere Luft aus der Gletscherspalte entfernt und durch kältere Umgebungsluft ersetzt wird.

2. Verfahren nach Anspruch 1, **dadurch gekennzeichnet, dass** die Luft aus der Gletscherspalte (2) abgesaugt wird.

3. Verfahren nach den Ansprüchen 1 und 2, **dadurch gekennzeichnet, dass** es an einer durch eine Schneebrücke (3a) abgedeckten Gletscherspalte (2) durchgeführt wird.

4. Vorrichtung zum Durchführen des Verfahrens nach einem der Ansprüche 1 bis 3, **gekennzeichnet durch** eine Absaugeinheit (7) mit einem Saugrohr (8), das mit einem Ansaugende (8a) in der Gletscherspalte (2) und mit einem Auslassende (8b) in der Umgebungsluft (5) außerhalb des Gletschers (1) anordenbar is, wobei dem Saugrohr eine Luft vom Ansaugende zum Auslassende führende Pumpe (15) zugeordnet ist, ferner durch eine den Luftstrom durch das Saugrohr steuernde Verschlusseinrichtung (10) und durch eine Mess- und Steuereinrichtung (24 - 26), die die Temperaturdifferenz zwischen der Luft in der Gletscherspalte (2) und der Umgebungsluft (5) ermittelt und die Verschlusseinrichtung so steuert, dass sie den Luftstrom nur bei einer positiven Temperaturdifferenz zwischen der Luft in der Gletscherspalte (2) und der Umgebungsluft (5) freigibt.

5. Vorrichtung nach Anspruch 4, **dadurch gekennzeichnet, dass** die Pumpe (15) durch Windenergie antreibbar ist.

6. Vorrichtung nach den Ansprüchen 4 und 5, **dadurch gekennzeichnet, dass** die Pumpe (15) in ein Saugrohr (8) angeordnetes Flügelrad (16) aufweist, das auf einer Welle (17) sitzt, die außerhalb des Saugrohrs ein Windrad (19) trägt.

7. Vorrichtung wenigstens nach Anspruch 4, **dadurch gekennzeichnet, dass** die Verschlusseinrichtung (10) eine im Saugrohr (8) angeordnete, schwenkbare Verschlusskappe (11) aufweist, der ein von der Mess- und Steuereinrichtung (24 - 26) gesteuerter Schwenkantrieb (13) zugeordnet ist.

8. Vorrichtung nach einem der Ansprüche 4 bis 7, **dadurch gekennzeichnet, dass** das Saugrohr (8) L-förmig ist und mit einem ersten L-Schenkel (8c) in der Gletscherspalte (2) einführbar und mit dem zweiten L-Schenkel (8d) außerhalb der Gletscheroberfläche anordenbar ist.

9. Vorrichtung nach Anspruch 8, **dadurch gekennzeichnet, dass** der erste L-Schenkel (8c) die Verschlusseinrichtung (10) und der zweite L-Schenkel (8d) die Pumpe (15) enthält.

10. Vorrichtung nach wenigstens einem der Ansprüche 4 bis 9, **dadurch gekennzeichnet, dass** der erste L-Schenkel (8c) einen internen, in der Gletscherspalte (2) verankerbaren Lagerabschnitt (8'c) und einen oberen, fest mit dem zweiten L-Schenkel (8d) verbundenen Drehabschnitt (8"c) aufweist, der drehbar so mit dem Lagerabschnitt (8'c) verbunden ist, dass sich der zweite L-Schenkel (8d) windfahnenartig drehen kann.

11. Vorrichtung nach einem der Ansprüche 4 bis 10, **dadurch gekennzeichnet, dass** dem Pumpenantrieb ein Stromerzeuger (27) zum Versorgen der Mess- und Steuereinrichtung (24 - 26) und des Schwenkantriebs (13) zugeordnet ist.

## Claims

1. A method for reducing the melting of glaciers with crevasses by heat removal, **characterised in that**, in the event of a positive temperature difference between the air temperature in a crevasse (2), in particular a marginal crevasse, and the temperature of the ambient air (5), warmer air is removed from the crevasse and replaced by colder ambient air.

2. A method 2 according to claim 1, **characterised in that** the air is extracted from the crevasse (2).

3. A method according to claims 1 and 2, **characterised in that** it is carried out on a crevasse (2) covered by a snow bridge (3a).

4. A device for carrying out the method according to one of claims 1 to 3, **characterised by** a suction unit (7) with a suction pipe (8), which can be arranged with a suction end (8a) in the glacier crevasse (2) and with an outlet end (8b) in the surrounding air (5) outside the glacier (1), wherein a pump (15) leading air from the suction end to the outlet end is associated with the suction pipe, further by a closure device (10) controlling the airflow through the suction pipe and by a measuring and control device (24 - 26) which determines the temperature difference between the air in the glacier crevasse (2) and the ambient air (5) and controls the closure device so that it releases the air flow only in the event of a positive temperature difference between the air in the glacier crevasse (2) and the ambient air (5).

5. A device according to claim 4, **characterised in that** the pump (15) can be driven by wind energy.

6. A device according to claims 4 and 5, **characterised in that** the pump (15) has an impeller (16) arranged in a suction pipe (8) and seated on a shaft (17) which carries a wind turbine (19) outside the suction pipe.

7. A device at least according to claim 4, **characterised in that** the closure device (10) has a pivotable closure cap (11) which is arranged in the suction pipe (8) and to which a pivot drive (13) controlled by the measuring and control device (24-26) is assigned.

8. A device according to one of claims 4 to 7, **characterised in that** the suction pipe (8) is L-shaped and can be introduced into the glacier crevasse (2) with a first L-leg (8c) and can be arranged outside the glacier surface with the second L-leg (8d).

9. A device according to claim 8, **characterised in that** the first L-leg (8c) contains the closure device (10) and the second L-leg (8d) contains the pump (15).

10. A device according to at least one of claims 4 to 9, **characterised in that** the first L-leg (8c) has an internal bearing section (8'c) which can be anchored in the crevasse (2) and an upper rotary section (8"c) which is firmly connected to the second L-leg (8d) and which is rotatably connected to the bearing section (8'c) in such a way that the second L-leg (8d) can rotate like a wind vane.

11. A device according to one of claims 4 to 10, **characterised in that** the pump drive is assigned a power generator (27) for supplying the measuring and control device (24 - 26) and the pivot drive (13).

## Revendications

1. Procédé pour réduire la fonte de glaciers avec crevasses par évacuation de chaleur, **caractérisé en ce que**, en cas de différence de température positive entre la température de l'air dans une crevasse (2), en particulier une crevasse marginale, et la température de l'air ambiant (5), l'air plus chaud est évacué de la crevasse et remplacé par un air ambiant plus froid.

2. Procédé 2 selon la revendication 1, **caractérisé en ce que** l'air est extrait de la crevasse (2).

3. Procédé selon les revendications 1 et 2, **caractérisé en ce qu'**il est réalisé sur une crevasse (2) recouverte par un pont de neige (3a).

4. Dispositif pour la mise en oeuvre du procédé selon l'une des revendications 1 à 3, **caractérisé par** une unité d'aspiration (7) avec un tuyau d'aspiration (8) qui peut être disposé avec une extrémité d'aspiration (8a) dans la crevasse du glacier (2) et avec une extrémité de sortie (8b) dans l'air environnant (5) en dehors du glacier (1), une pompe (15) amenant l'air du côté aspiration vers le côté sortie étant associée au tuyau d'aspiration, avec en outre un dispositif de fermeture (10) commandant le flux d'air à travers la conduite d'aspiration et un dispositif de mesure et de régulation (24 - 26) qui détermine la différence de température entre l'air dans la crevasse glaciaire (2) et l'air ambiant (5) et commande le dispositif de fermeture de sorte qu'il ne déclenche le flux d'air que dans le cas d'une différence positive entre la température ambiante (5) et l'air dans la crevasse glaciaire (2).

5. Dispositif selon la revendication 4, **caractérisé en ce que** la pompe (15) peut être entraînée par l'énergie éolienne.

6. Dispositif selon les revendications 4 et 5, **caractérisé en ce que** la pompe (15) présente une roue (16) disposée dans une conduite d'aspiration (8) et montée sur un arbre (17) qui porte une éolienne (19) en dehors de la conduite d'aspiration.

7. Dispositif au moins selon la revendication 4, **caractérisé en ce que** le dispositif de fermeture (10) présente un capuchon de fermeture pivotant (11) disposé dans le tuyau d'aspiration (8) et auquel est associé un entraînement pivotant (13) commandé par le dispositif de mesure et de commande (24-26).

8. Dispositif selon l'une des revendications 4 à 7, **caractérisé en ce que** le tuyau d'aspiration (8) est en forme de L et peut être introduit dans la crevasse glaciaire (2) avec une première section en L (8c) et peut être disposé en dehors de la surface glaciaire avec la seconde section en L (8d).

9. Dispositif selon la revendication 8, **caractérisé en ce que** la première section en L (8c) contient le dispositif de fermeture (10) et la seconde section en L (8d) contient la pompe (15).

10. Dispositif selon au moins l'une des revendications 4 à 9, **caractérisé en ce que** la première section en L (8c) présente une section d'appui interne (8'c) qui peut être ancrée dans la crevasse (2) et une section rotative supérieure (8 "c) qui est reliée fermement à la seconde section en L (8d) et qui est reliée de manière à pouvoir tourner à la section d'appui (8'c) de telle sorte que la seconde section en L (8d) peut tourner comme une aube.

11. Dispositif selon l'une des revendications 4 à 10, **caractérisé en ce qu'**un générateur de puissance (27) est associé à l'entraînement de la pompe pour alimenter le dispositif de mesure et de commande (24 - 26) et l'entraînement pivotant (13).
